(19) Europäisches Patentamt
European Patent Office
Office européen des brevets

(11) EP 3 642 048 B1

(12) # FASCICULE DE BREVET EUROPEEN

(45) Date de publication et mention de la délivrance du brevet:
**19.10.2022 Bulletin 2022/42**

(21) Numéro de dépôt: **18748986.9**

(22) Date de dépôt: **21.06.2018**

(51) Classification Internationale des Brevets (IPC):
***C08L 7/00*** *(2006.01)* ***B60C 1/00*** *(2006.01)*
***C08K 3/04*** *(2006.01)* ***C08K 3/36*** *(2006.01)*
***C08K 5/548*** *(2006.01)*

(52) Classification Coopérative des Brevets (CPC):
(C-Sets disponibles)
**C08K 3/36; B60C 1/0016; B60C 11/005; C08K 3/04; C08K 5/548;** B60C 2011/0033; B60C 2200/06 (Cont.)

(86) Numéro de dépôt international:
**PCT/FR2018/051509**

(87) Numéro de publication internationale:
**WO 2018/234708 (27.12.2018 Gazette 2018/52)**

(54) **PNEUMATIQUE POUR VEHICULE POIDS LOURDS**

REIFEN FÜR SCHWERLASTKRAFTWAGEN

TYRE FOR HEAVY GOODS VEHICLE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **22.06.2017 FR 1755729**

(43) Date de publication de la demande:
**29.04.2020 Bulletin 2020/18**

(73) Titulaire: **Compagnie Générale des Etablissements Michelin**
**63000 Clermont-Ferrand (FR)**

(72) Inventeurs:
- **GONCALVES, Olivier**
  **63040 Clermont-Ferrand Cedex 9 (FR)**
- **KALLUNGAL ABDUL JALEEL, Muhamed Jesbeer**
  **63040 Clermont-Ferrand Cedex 9 (FR)**
- **VALLAT, Perrine**
  **63040 Clermont-Ferrand Cedex 9 (FR)**

(74) Mandataire: **Bocchi, Brigitte**
**M. F. P. Michelin**
**23, place des Carmes-Déchaux**
**Service juridique - Propriété Intellectuelle**
**DCJ/PI - F35 - Site de Ladoux**
**63040 Clermont-Ferrand Cedex 9 (FR)**

(56) Documents cités:
**WO-A1-2011/076635 WO-A1-2014/102136**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

(52) Classification Coopérative des Brevets (CPC):
(Cont.)

C-Sets
**C08K 3/04, C08L 7/00;**
**C08K 3/36, C08L 7/00;**
**C08K 5/548, C08L 7/00**

## Description

La présente invention concerne un pneumatique destiné à équiper des véhicules portant de lourdes charges et roulant à vitesse soutenue, tels que, par exemple les camions, tracteurs, remorques ou bus routiers, avion etc., et plus particulièrement la bande de roulement d'un tel pneumatique, destinée à entrer en contact avec un sol par l'intermédiaire d'une surface de roulement et à être usée.

D'une manière générale dans les pneumatiques de type poids-lourds, l'armature de carcasse est ancrée de part et d'autre dans la zone du bourrelet et est surmontée radialement par une armature de sommet constituée d'au moins deux couches, superposées et formées de fils ou câbles parallèles dans chaque couche et croisés d'une couche à la suivante en faisant avec la direction circonférentielle des angles compris entre 10° et 45°. Lesdites couches de travail, formant l'armature de travail, peuvent encore être recouvertes d'au moins une couche dite de protection et formée d'éléments de renforcement avantageusement métalliques et extensibles, dits élastiques. Elle peut également comprendre une couche de fils ou câbles métalliques à faible extensibilité faisant avec la direction circonférentielle un angle compris entre 45° et 90°, cette nappe, dite de triangulation, étant radialement située entre l'armature de carcasse et la première nappe de sommet dite de travail, formées de fils ou câbles parallèles présentant des angles au plus égaux à 45° en valeur absolue. La nappe de triangulation forme avec au moins ladite nappe de travail une armature triangulée, qui présente, sous les différentes contraintes qu'elle subit, peu de déformations, la nappe de triangulation ayant pour rôle essentiel de reprendre les efforts de compression transversale dont est l'objet l'ensemble des éléments de renforcement dans la zone du sommet du pneumatique.

Radialement à l'extérieur de l'armature de sommet, on trouve la bande de roulement habituellement constituée de matériaux polymériques destinés à venir au contact du sol dans l'aire de contact entre le sol et le pneumatique.

Des câbles sont dits inextensibles lorsque lesdits câbles présentent sous une force de traction égale à 10% de la force de rupture un allongement relatif au plus égal à 0,2%.

Des câbles sont dits élastiques lorsque lesdits câbles présentent sous une force de traction égale à la charge de rupture un allongement relatif au moins égal à 3% avec un module tangent maximum inférieur à 150 GPa.

Un pneumatique ayant une géométrie de révolution par rapport à un axe de rotation, la géométrie du pneumatique est généralement décrite dans un plan méridien contenant l'axe de rotation du pneumatique. Pour un plan méridien donné, les directions radiale, axiale et circonférentielle désignent respectivement les directions perpendiculaire à l'axe de rotation du pneumatique, parallèle à l'axe de rotation du pneumatique et perpendiculaire au plan méridien.

Dans ce qui suit, les expressions «radialement intérieur », respectivement « radialement extérieur», signifient «plus proche », respectivement « plus éloigné de l'axe de rotation du pneumatique ». Par «axialement intérieur », respectivement « axialement extérieur», on entend «plus proche », respectivement « plus éloigné » du plan équatorial du pneumatique, le plan équatorial du pneumatique étant le plan passant par le milieu de la surface de roulement du pneumatique et perpendiculaire à l'axe de rotation du pneumatique.

Certains pneumatiques actuels, dits "routiers", sont destinés à rouler à grande vitesse et sur des trajets de plus en plus longs, du fait de l'amélioration du réseau routier et de la croissance du réseau autoroutier dans le monde. L'ensemble des conditions, sous lesquelles un tel pneumatique est appelé à rouler, permet sans aucun doute un accroissement du nombre de kilomètres parcourus, l'usure du pneumatique étant moindre; par contre l'endurance de ce dernier et en particulier de l'armature de sommet est pénalisée.

Il existe en effet des contraintes au niveau de l'armature de sommet et plus particulièrement des contraintes de cisaillement entre les couches de sommet, alliées à une élévation non négligeable de la température de fonctionnement au niveau des extrémités de la couche de sommet axialement la plus courte, qui ont pour conséquence l'apparition et la propagation de fissures de la gomme au niveau desdites extrémités. Ce problème existe dans le cas de bords de deux couches d'éléments de renforcement, lesdites couches n'étant pas obligatoirement radialement adjacentes.

Pour limiter des élévations de température trop importantes au niveau du sommet du pneumatique, les matériaux constitutifs de la bande de roulement sont avantageusement choisis avec des pertes hystérétiques adaptées aux conditions de fonctionnement du pneumatique.

Par ailleurs, afin d'augmenter encore la durée de vie des pneumatiques, il est usuel de choisir des matériaux polymériques constitutifs de la bande de roulement présentant des propriétés de résistance en usure améliorées. De tels matériaux pénalisant le plus souvent les propriétés hystérétiques, il est encore connu de réaliser la bande de roulement d'un pneumatique par une superposition radiale de deux matériaux différents pour obtenir un compromis des propriétés d'usure et d'hystérèse satisfaisant pour les applications envisagées.

Ainsi on cherche sans cesse à améliorer les propriétés des pneumatiques et en particulier leur résistance à l'usure et, classiquement, l'amélioration de la résistance à l'usure est connue pour se traduire par une augmentation de la résistance au roulement, et donc de la consommation d'énergie.

Pour obtenir les propriétés de renforcement optimales conférées par une charge dans une bande de roulement de pneumatique et ainsi une haute résistance à l'usure, on sait qu'il convient d'une manière générale que cette charge soit présente dans la matrice élastomérique sous une forme finale qui soit à la fois la plus finement divisée possible et

répartie de la façon la plus homogène possible. Or, de telles conditions ne peuvent être réalisées que dans la mesure où cette charge présente une très bonne aptitude, d'une part à s'incorporer dans la matrice lors du mélange avec l'élastomère et à se désagglomérer, d'autre part à se disperser de façon homogène dans cette matrice.

De manière connue, le noir de carbone présente de telles aptitudes, ce qui n'est en général pas le cas des charges inorganiques, en particulier des silices. En effet, pour des raisons d'affinités réciproques, ces particules de charge inorganique ont une fâcheuse tendance, dans la matrice élastomérique, à s'agglomérer entre elles. Ces interactions ont pour conséquence néfaste de limiter la dispersion de la charge et donc les propriétés de renforcement à un niveau sensiblement inférieur à celui qu'il serait théoriquement possible d'atteindre si toutes les liaisons (charge inorganique/élastomère) susceptibles d'être créées pendant l'opération de mélangeage, étaient effectivement obtenues; ces interactions tendent d'autre part à augmenter la consistance à l'état cru des compositions caoutchouteuses et donc à rendre leur mise en œuvre ("processability") plus difficile qu'en présence de noir de carbone.

Il existe donc un besoin de disposer d'une charge apportant le niveau d'hystérèse de la silice et le caractère renforçant d'une charge telle que le noir de carbone dans des compositions de caoutchouc.

C'est pourquoi les charges renforçantes recouvertes au moins partiellement de silice sont particulièrement intéressantes, en particulier des charges renforçantes constituées de noir de carbone recouvert au moins partiellement de silice telles que décrites notamment dans les publications WO98/13428 et EP 711 805 B1, des charges renforçantes constituées d'oxyde métallique recouvert au moins partiellement de silice telles que décrites notamment dans la publication FR2888243.

L'intérêt d'utiliser des charges recouvertes en surface d'une silice notamment à haute surface spécifique réside principalement dans la possibilité d'augmenter le nombre de liaisons de la silice avec l'élastomère et donc d'augmenter le niveau de renforcement de celui-ci.

Le document EP0997490 divulgue des compositions pour pneumatiques utilisés pour les Poids-Lourds qui comprennent à titre de charge renforçante des noirs de carbone recouverts de silice permettant à taux de charge constant, soit d'améliorer la résistance au roulement à résistance à l'usure constante, soit d'améliorer la résistance à l'usure à résistance au roulement constante.

La demanderesse a découvert de façon surprenante, que des pneumatiques utilisés pour les véhicules poids lourds, dont une partie de la bande de roulement radialement intérieure, est constituée par une composition à base d'élastomère diénique et de charge recouverte au moins partiellement de silice, et présentant une très bonne dispersion de la charge renforçante dans la matrice élastomérique, permettaient d'obtenir des pneumatiques présentant à la fois des propriétés thermiques améliorées mais également présentant des propriétés améliorées de durée de vie des pneumatiques.

Pour obtenir une bonne dispersion de la charge dans la matrice élastomérique, on peut notamment procéder au mélange de l'élastomère et de la charge en phase « liquide ». Pour ce faire, on a fait appel à un élastomère sous forme de latex qui se présente sous forme de particules d'élastomère dispersées dans l'eau, et à une dispersion aqueuse de la charge, c'est-à-dire une charge dispersée dans de l'eau, couramment appelée « slurry ». Certains procédés en particulier, tels que ceux décrits dans le document US 6 048 923, permettent d'obtenir un mélange maître d'élastomère et de charge présentant une très bonne dispersion de la charge dans la matrice élastomérique, très améliorée par rapport à la dispersion de la charge dans la matrice élastomérique susceptible d'être obtenue lors du mélange en phase solide d'élastomère et de charge renforçante, qui sont adaptés également pour des charges renforçantes recouvertes au moins partiellement de silice comme le montre le document WO2012/037244.

L'invention a ainsi pour objet un pneumatique à armature de carcasse radiale destiné à équiper des véhicules portant de lourdes charges et roulant à vitesse soutenue, comprenant une armature de sommet, elle-même coiffée radialement d'une bande de roulement réunie à deux bourrelets par l'intermédiaire de deux flancs, ladite bande de roulement comprenant au moins deux couches de mélange polymérique radialement superposées, une première couche radialement extérieure venant au contact du sol et une deuxième couche radialement intérieure, caractérisé la deuxième couche a une composition à base d'au moins un élastomère diénique, une charge renforçante comprenant majoritairement une charge recouverte au moins partiellement de silice, un agent de couplage de la charge avec l'élastomère et un système de réticulation, la dispersion de la charge dans la matrice élastomérique ayant une note Z supérieure ou égale à 70.

Selon une variante de réalisation de l'invention, la bande de roulement comprend une troisième couche radialement intérieure à la deuxième couche, la troisième couche ayant une composition identique ou différente de celle de la deuxième couche.

Avantageusement, la charge recouverte au moins partiellement de silice constitue au moins 60% en poids de la charge renforçante totale de la composition, de préférence la charge recouverte au moins partiellement de silice constitue au moins 80% en poids de la charge renforçante totale de la composition.

On entend dans ce qui suit par « mélange maître » (couramment désigné par son nom anglais « masterbatch »): un composite à base d'élastomère dans lequel a été introduite une charge et éventuellement d'autres additifs.

## I. - MESURES ET TESTS

Les compositions de caoutchouc sont caractérisées, avant et après cuisson, comme indiqué ci-après.

Dispersion

D'une manière connue, la dispersion de charge dans une matrice élastomérique peut être représentée par la note Z, qui est mesurée, après réticulation, selon la méthode décrite par S. Otto et Al dans Kautschuk Gummi Kunststoffe, 58 Jahrgang, NR 7-8/2005, en accord avec la norme ISO 11345.
Le calcul de la note Z est basé sur le pourcentage de surface dans laquelle la charge n'est pas dispersée (« % surface non dispersée »), telle que mesurée par l'appareil « disperGRADER+ » fourni avec son mode opératoire et son logiciel d'exploitation « disperDATA » par la société Dynisco selon l'équation :

$$Z = 100 - (\%\ \text{surface non dispersée}) / 0.35$$

Le pourcentage de surface non dispersée est, quant à lui, mesuré grâce à une caméra observant la surface de l'échantillon sous une lumière incidente à 30°. Les points clairs sont associés à de la charge et à des agglomérats, tandis que les points foncés sont associés à la matrice de caoutchouc ; un traitement numérique transforme l'image en une image noir et blanche, et permet la détermination du pourcentage de surface non dispersée, telle que décrite par S.Otto dans le document précité.
Plus est la note Z haute, meilleure est la dispersion de la charge dans la matrice élastomérique (une note Z de 100 correspondant à une dispersion parfaite et une note Z de 0 à une dispersion médiocre). On considèrera qu'une note Z supérieure ou égale à 80 correspond à une surface présentant une très bonne dispersion de la charge dans la matrice élastomérique.

Propriétés dynamiques

Les propriétés dynamiques, dont tan(δ)max, sont mesurées sur un viscoanalyseur (Metravib V A4000), selon la norme ASTM D 5992 - 96. On enregistre la réponse d'un échantillon de composition vulcanisée (éprouvette cylindrique de 4 mm d'épaisseur et de 400 $mm^2$ de section), soumis à une sollicitation sinusoïdale en cisaillement simple alterné, à la fréquence de 10Hz, dans les conditions normales de température selon la norme ASTM D 1349 - 99. On effectue un balayage en amplitude de déformation crête à crête de 0,1 à 100% (cycle aller), puis de 100% à 0.1 % (cycle retour). Le résultat exploité est le facteur de perte, tan(δ). Pour le cycle aller, on indique la valeur maximale de tan(δ) observée (tan(δ)max). Les valeurs de tan(δ)max données ci-après sont mesurées à 100°C.

Description du test de résistance à l'usure

Les tests d'usure ont été réalisés sur des pneumatiques montés sur la position avant d'un camion de type tracteur. Ces tests d'usure sont réalisés pour deux pneumatiques d'une composition témoin T et pour deux pneumatiques d'une composition I selon l'invention. Le roulage d'usure est mené sur une distance de 30 000km. La performance usure exprimée en base 100 du témoin est calculée par le ratio entre la perte de hauteur moyenne mesurée pour les deux pneus de la composition témoin T et la perte de hauteur moyenne pour les deux pneus de la composition I. Un indice supérieur à 100 indique une performance usure améliorée pour les pneus de composition I par rapport aux pneus de composition T.

## II. DESCRIPTION DETAILLEE DE L'INVENTION

La présente invention concerne un pneumatique à armature de carcasse radiale destiné à équiper des véhicules portant de lourdes charges et roulant à vitesse soutenue, comprenant une armature de sommet, elle-même coiffée radialement d'une bande de roulement réunie à deux bourrelets par l'intermédiaire de deux flancs, ladite bande de roulement comprenant au moins deux couches de mélange polymérique radialement superposées, une première couche radialement extérieure venant au contact du sol et une deuxième couche radialement intérieure, caractérisé la deuxième couche a une composition à base d'au moins un élastomère diénique, une charge renforçante comprenant majoritairement une charge recouverte au moins partiellement de silice, un agent de couplage de la charge avec l'élastomère et un système de réticulation, caractérisée en ce que la dispersion de la charge dans la matrice élastomérique a une note Z supérieure ou égale à 70.
Par l'expression composition "à base de", il faut entendre une composition comportant le mélange et/ou le

produit de réaction des différents constituants utilisés, certains de ces constituants de base étant susceptibles de, ou destinés à, réagir entre eux, au moins en partie, lors des différentes phases de fabrication de la composition, en particulier au cours de sa réticulation ou vulcanisation.

Dans la présente description, sauf indication expresse différente, tous les pourcentages (%) indiqués sont des pourcentages (%) en masse. D'autre part, tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).

Les demanderesses ont tout d'abord su mettre en évidence que la présence d'une composition à base d'au moins un élastomère diénique, une charge renforçante comprenant majoritairement une charge recouverte au moins partiellement de silice, un agent de couplage de la charge avec l'élastomère et un système de réticulation, la dispersion de la charge dans la matrice élastomérique ayant une note Z supérieure ou égale à 70, comme matériau de la bande de roulement radialement plus intérieur conduit à un compromis entre les propriétés de résistance à l'usure et les montées en température au niveau du sommet du pneumatique satisfaisant pour les usages routiers tels que décrits précédemment.

Selon une variante avantageuse de l'invention, le rapport du volume de la couche du deuxième mélange élastomérique sur la somme des volumes des premier et deuxième mélanges élastomériques est compris entre 25 et 70 %.

Le profil du deuxième mélange élastomérique vu selon une coupe méridienne du pneumatique est tel que celui-ci apparaisse sensiblement simultanément sur toute la largeur de la bande de roulement lors de l'usure de ladite bande de roulement. Le concepteur du pneumatique saura définir un tel profil en fonction de la dimension et de l'usage du pneumatique.

Avantageusement encore, le rapport de l'épaisseur, mesurée selon la direction radiale à l'extrémité de la couche de travail radialement la plus extérieure dans une coupe méridienne du pneumatique, de la couche du deuxième mélange élastomérique sur la somme des épaisseurs, mesurées selon la direction radiale à l'extrémité de la couche de travail radialement la plus extérieure dans une coupe méridienne du pneumatique, des premier et deuxième mélanges élastomériques est compris entre 15 et 50 %.

Une variante avantageuse de l'invention prévoit encore la présence d'une couche d'un troisième mélange élastomérique radialement intérieure au deuxième mélange élastomérique et au contact de celui-ci, de composition identique ou différente de celle de la deuxième couche.

Dans la variante avantageuse où cette troisième couche a également une composition à base d'au moins un élastomère diénique, une charge renforçante comprenant majoritairement une charge recouverte au moins partiellement de silice, un agent de couplage de la charge avec l'élastomère et un système de réticulation, la dispersion de la charge dans la matrice élastomérique ayant une note Z supérieure ou égale à 70, la présence de cette troisième couche peut permettre de diminuer encore les montées en température de la bande de roulement lors de l'usage souhaité du pneumatique notamment lorsque le deuxième mélange élastomérique présente des propriétés hystérétiques tendant à augmenter ladite température.

Plus particulièrement dans le cas de pneumatique dont la sculpture est constituée de ribs parallèles, la troisième couche de mélange élastomérique est avantageusement discontinue. Elle est préférentiellement alors interrompue sous les rainures.

Selon ce dernier mode de réalisation, il est avantageusement possible d'effectuer un recreusage de la sculpture avant d'envisager un rechapage sans risque de voir apparaître en surface de la bande de roulement ladite troisième couche de mélange élastomérique. Avantageusement selon ce dernier mode de réalisation, le rapport du volume de la couche du deuxième mélange élastomérique sur la somme des volumes des trois mélanges élastomériques est compris entre 20 et 40 %.

Avantageusement encore selon ce dernier mode de réalisation, le rapport du volume de la couche du troisième mélange élastomérique sur la somme des volumes des trois mélanges élastomériques est compris entre 10 et 30 %.

Selon ce dernier mode de réalisation, le rapport de l'épaisseur, mesurée selon la direction radiale à l'extrémité de la couche de travail radialement la plus extérieure dans une coupe méridienne du pneumatique, de la couche du deuxième mélange élastomérique sur la somme des épaisseurs, mesurées selon la direction radiale à l'extrémité de la couche de travail radialement la plus extérieure dans une coupe méridienne du pneumatique, des trois mélanges élastomériques est avantageusement compris entre 10 et 30 %.

Avantageusement encore selon ce dernier mode de réalisation, le rapport de l'épaisseur, mesurée selon la direction radiale à l'extrémité de la couche de travail radialement la plus extérieure dans une coupe méridienne du pneumatique, de la couche du troisième mélange élastomérique sur la somme des épaisseurs, mesurées selon la direction radiale à l'extrémité de la couche de travail radialement la plus extérieure dans une coupe méridienne du pneumatique, des trois mélanges élastomériques est compris entre 10 et 30 %.

Selon l'invention, les mesures de volume et d'épaisseurs précitées sont réalisées sur des pneumatiques à

l'état neuf, n'ayant pas roulés et donc ne présentant aucune usure de la bande de roulement.

Selon un mode de réalisation de l'invention, l'armature de sommet du pneumatique est formée d'au moins deux couches de sommet de travail d'éléments de renforcement inextensibles, croisés d'une couche à l'autre en faisant avec la direction circonférentielle des angles compris entre 10° et 45°.

Selon d'autres modes de réalisation de l'invention, l'armature de sommet comporte encore au moins une couche d'éléments de renforcement circonférentiels.

Une réalisation de l'invention prévoit encore que l'armature de sommet est complétée radialement à l'extérieur par au moins une couche supplémentaire, dite de protection, d'éléments de renforcement dits élastiques, orientés par rapport à la direction circonférentielle avec un angle compris entre 10° et 45° et de même sens que l'angle formé par les éléments inextensibles de la couche de travail qui lui est radialement adjacente.

Selon l'un quelconque des modes de réalisation de l'invention évoqué précédemment, l'armature de sommet peut encore être complétée, radialement à l'intérieur entre l'armature de carcasse et la couche de travail radialement intérieure la plus proche de ladite armature de carcasse, par une couche de triangulation d'éléments de renforcement inextensibles métalliques en acier faisant, avec la direction circonférentielle, un angle supérieur à 60° et de même sens que celui de l'angle formé par les éléments de renforcement de la couche radialement la plus proche de l'armature de carcasse.

Elastomère diénique

De façon usuelle, on utilise indifféremment dans le texte les termes « élastomère » et « caoutchouc » qui sont interchangeables.

La composition conforme à l'invention comprend au moins un premier élastomère diénique et éventuellement un deuxième élastomère identique ou différent du premier, qui peut donc être ou pas un élastomère diénique.

Par élastomère ou caoutchouc "diénique", doit être compris de manière connue un élastomère issu au moins en partie (i.e., un homopolymère ou un copolymère) de monomères diènes (monomères porteurs de deux doubles liaisons carbone-carbone, conjuguées ou non).

Ces élastomères diéniques peuvent être classés dans deux catégories : "essentiellement insaturés" ou "essentiellement saturés". On entend en général par "essentiellement insaturé", un élastomère diénique issu au moins en partie de monomères diènes conjugués, ayant un taux de motifs ou unités d'origine diénique (diènes conjugués) qui est supérieur à 15% (% en moles) ; c'est ainsi que des élastomères diéniques tels que les caoutchoucs butyle ou les copolymères de diènes et d'alpha-oléfines type EPDM n'entrent pas dans la définition précédente et peuvent être notamment qualifiés d'élastomères diéniques "essentiellement saturés" (taux de motifs d'origine diénique faible ou très faible, toujours inférieur à 15%). Dans la catégorie des élastomères diéniques "essentiellement insaturés", on entend en particulier par élastomère diénique "fortement insaturé" un élastomère diénique ayant un taux de motifs d'origine diénique (diènes conjugués) qui est supérieur à 50%.

Parmi ces élastomères diéniques, on distingue par ailleurs le caoutchouc naturel et les élastomères synthétiques.

Par élastomères diéniques synthétiques susceptibles d'être utilisés conformément à l'invention, on entend plus particulièrement par élastomère diénique:

(a) - tout homopolymère obtenu par polymérisation d'un monomère diène conjugué ayant de 4 à 12 atomes de carbone;

(b) - tout copolymère obtenu par copolymérisation d'un ou plusieurs diènes conjugués entre eux ou avec un ou plusieurs composés vinyle aromatique ayant de 8 à 20 atomes de carbone;

(c) - un copolymère ternaire obtenu par copolymérisation d'éthylène, d'une $\alpha$-oléfine ayant 3 à 6 atomes de carbone avec un monomère diène non conjugué ayant de 6 à 12 atomes de carbone, comme par exemple les élastomères obtenus à partir d'éthylène, de propylène avec un monomère diène non conjugué du type précité tel que notamment l'hexadiène-1,4, l'éthylidène norbornène, le dicyclopentadiène;

(d) - un copolymère d'isobutène et d'isoprène (caoutchouc butyle), ainsi que les versions halogénées, en particulier chlorées ou bromées, de ce type de copolymère.

A titre de diènes conjugués conviennent notamment le butadiène-1,3, le 2-méthyl-1,3-butadiène, les 2,3-di(alkyle en $C_1$-$C_5$)-1,3-butadiènes tels que par exemple le 2,3-diméthyl-1,3-butadiène, le 2,3-diéthyl-1,3-butadiène, le 2-méthyl-3-éthyl-1,3-butadiène, le 2-méthyl-3-isopropyl-1,3-butadiène, un aryl-1,3-butadiène, le 1,3-pentadiène, le 2,4-hexadiène. A titre de composés vinylaromatiques conviennent par exemple le styrène, l'ortho-, méta-, para-méthylstyrène, le mélange commercial "vinyle-toluène", le para-tertiobutylstyrène, les méthoxystyrènes, les chlorostyrènes, le vinylmésitylène, le divinylbenzène, le vinylnaphtalène.

Les copolymères peuvent contenir entre 99% et 20% en poids d'unités diéniques et entre 1% et 80% en poids

d'unités vinylaromatiques. Les élastomères peuvent avoir toute microstructure qui est fonction des conditions de polymérisation utilisées, notamment de la présence ou non d'un agent modifiant et/ou randomisant et des quantités d'agent modifiant et/ou randomisant employées. Les élastomères peuvent être par exemple à blocs, statistiques, séquencés, microséquencés, et être préparés en dispersion ou en solution ; ils peuvent être couplés et/ou étoilés ou encore fonctionnalisés avec un agent de couplage et/ou d'étoilage ou de fonctionnalisation. Pour un couplage à du noir de carbone, on peut citer par exemple des groupes fonctionnels comprenant une liaison C-Sn ou des groupes fonctionnels aminés tels que aminobenzophénone par exemple ; pour un couplage à une charge inorganique telle que silice, on peut citer par exemple des groupes fonctionnels silanol ou polysiloxane ayant une extrémité silanol (tels que décrits par exemple dans FR 2 740 778 ou US 6 013 718, et WO 2008/141702), des groupes alkoxysilane (tels que décrits par exemple dans FR 2 765 882 ou US 5 977 238), des groupes carboxyliques (tels que décrits par exemple dans WO 01/92402 ou US 6 815 473, WO 2004/096865 ou US 2006/0089445) ou encore des groupes polyéthers (tels que décrits par exemple dans EP 1 127 909 ou US 6 503 973, WO 2009/000750 et WO 2009/000752). Comme autres exemples d'élastomères fonctionnalisés, on peut citer également des élastomères (tels que SBR, BR, NR ou IR) du type époxydés.

Conviennent les polybutadiènes et en particulier ceux ayant une teneur (% molaire) en unités -1,2 comprise entre 4% et 80% ou ceux ayant une teneur (% molaire) en cis-1,4 supérieure à 80%, les polyisoprènes, les copolymères de butadiène-styrène et en particulier ceux ayant une Tg (température de transition vitreuse (Tg, mesurée selon ASTM D3418) comprise entre 0°C et - 70°C et plus particulièrement entre - 10°C et - 60°C, une teneur en styrène comprise entre 5% et 60% en poids et plus particulièrement entre 20% et 50%, une teneur (% molaire) en liaisons -1,2 de la partie butadiénique comprise entre 4% et 75%, une teneur (% molaire) en liaisons trans-1,4 comprise entre 10% et 80%, les copolymères de butadiène-isoprène et notamment ceux ayant une teneur en isoprène comprise entre 5% et 90% en poids et une Tg de - 40°C à - 80°C, les copolymères isoprène-styrène et notamment ceux ayant une teneur en styrène comprise entre 5% et 50% en poids et une Tg comprise entre - 5 C et - 50°C. Dans le cas des copolymères de butadiène-styrène-isoprène conviennent notamment ceux ayant une teneur en styrène comprise entre 5% et 50% en poids et plus particulièrement comprise entre 10% et 40%, une teneur en isoprène comprise entre 15% et 60% en poids et plus particulièrement entre 20% et 50%, une teneur en butadiène comprise entre 5% et 50% en poids et plus particulièrement comprise entre 20% et 40%, une teneur (% molaire) en unités -1,2 de la partie butadiénique comprise entre 4% et 85%, une teneur (% molaire) en unités trans -1,4 de la partie butadiénique comprise entre 6% et 80%, une teneur (% molaire) en unités -1,2 plus -3,4 de la partie isoprénique comprise entre 5% et 70% et une teneur (% molaire) en unités trans -1,4 de la partie isoprénique comprise entre 10% et 50%, et plus généralement tout copolymère butadiène-styrène-isoprène ayant une Tg comprise entre - 5°C et - 70°C.

En résumé, le ou les élastomères diéniques synthétiques selon l'invention sont choisis préférentiellement dans le groupe des élastomères diéniques fortement insaturés constitué par les polybutadiènes (en abrégé "BR"), les polyisoprènes (IR) de synthèse, les copolymères de butadiène, les copolymères d'isoprène et les mélanges de ces élastomères. De tels copolymères sont plus préférentiellement choisis dans le groupe constitué par les copolymères de butadiène-styrène (SBR), les copolymères d'isoprène-butadiène (BIR), les copolymères d'isoprène-styrène (SIR) et les copolymères d'isoprène-butadiène-styrène (SBIR).

Comme il a été précisé plus haut, les procédés de mélangeage en phase liquide sont préférentiellement utilisés pour permettre d'obtenir des mélanges maîtres à base d'élastomère diénique et de charge renforçante présentant une très bonne dispersion de la charge renforçante dans l'élastomère. Ainsi notamment pour la réalisation du mélange maître d'élastomère diénique et de charge recouverte au moins partiellement par de la silice, on utilisera plus particulièrement un latex d'élastomère diénique, le latex d'élastomère étant une forme particulière de l'élastomère qui se présente sous forme de particules d'élastomère dispersées dans l'eau.

L'invention concerne donc préférentiellement les latex d'élastomères diéniques, les élastomères diéniques étant ceux définis précédemment.

Plus particulièrement, pour le caoutchouc naturel (NR) qui convient particulièrement à l'invention, ce caoutchouc naturel existe sous différentes formes comme le détail le chapitre 3 « Latex concentrates : properties and composition », de K.F. Gaseley, A.D.T. Gordon et T.D. Pendle dans « Naturel Rubber Science and Technology », A.D. Roberts, Oxford University Press - 1988.

En particulier plusieurs formes de latex de caoutchouc naturel sont commercialisés : les latex de caoutchouc naturel dits « de champ » (« field latex »), les latex de caoutchouc naturel dits « concentrés » (« concentrated natural rubber latex »), les latex epoxydés (« ENR »), les latex déprotéinisés ou encore les latex prévulcanisés. Le latex de caoutchouc naturel de champ est un latex dans lequel de l'ammoniac a été ajouté pour éviter une coagulation précoce et le latex de caoutchouc naturel concentré correspond à un latex de champ qui a subi un traitement correspondant à un lavage suivi d'une nouvelle concentration. Les différentes catégories de latex de caoutchouc naturel concentrés sont répertoriées notamment selon la norme ASTM D 1076-06. Parmi ces latex de caoutchouc naturel concentrés, on distingue notamment des latex de caoutchouc naturel concentrés de qualité dite: « HA » (high ammonia) et de qualité dite « LA » ; on utilisera avantageusement pour l'invention des latex de caoutchouc naturel concentrés de qualité HA.

Le latex de NR peut être préalablement modifié physiquement ou chimiquement (centrifugation, traitement

enzymatique, modifiant chimique...)

Le latex peut être utilisé directement ou être préalablement dilué dans de l'eau pour faciliter sa mise en œuvre.

Ainsi à titre de latex d'élastomère synthétique, le latex peut notamment consister en un élastomère diénique synthétique déjà disponible sous forme d'émulsion (par exemple un copolymère de butadiène et de styrène, SBR, préparé en émulsion), ou en un élastomère diénique synthétique initialement en solution (par exemple un SBR préparé en solution) qui est émulsifié dans un mélange de solvant organique et d'eau, généralement au moyen d'un agent tensio-actif.

Convient particulièrement à l'invention un latex de SBR, notamment un SBR préparé en émulsion ("ESBR") ou un SBR préparé en solution ("SSBR"), et plus particulièrement un SBR préparé en émulsion.

Il existe deux grands types de procédés de copolymerisation en émulsion du styrène et de butadiène, l'un d'entre eux, ou procédé à chaud (mis en oeuvre à une température proche de 50° C), étant adapté pour la préparation de SBR très ramifiés alors que l'autre, ou procédé à froid (mis en oeuvre à une température pouvant aller de 15° C à 40° C), permet d'obtenir des SBR plus linéaires.

Pour une description détaillée de l'efficacité de plusieurs émulsifiants utilisables dans ledit procédé à chaud (en fonction des taux desdits émulsifiants), on pourra par exemple se reporter aux deux articles de C. W. Carr, 1. M. Kolthoff, E. J. Meehan, University of Minesota, Minneapolis, Minesota qui ont paru dans Journal of Polymer Science de 1950, Vol. V, n°2, pp. 201-206, et de 1951, Vol. VI, n° 1, pp. 73-81.

Concernant des exemples comparatifs de mise en oeuvre dudit procédé à froid, on pourra par exemple se reporter à l'article ½ Industrial and Engineering Chemistry, 1948, Vol. 40, n° 5, pp. 932-937, E. J. Vandenberg, G. E. Hulse, Hercules Powder Company, Wilmington, Delaware + et a l'article ½ Industrial and Engineering Chemistry, 1954, Vol. 46, n° 5, pp. 1065-1073, J. R. Miller, H. E. Diem, B. F. Goodrich Chemical Co. , Akron, Ohio +.

Dans le cas d'un élastomère SBR (ESBR ou SSBR), on utilise notamment un SBR ayant une teneur en styrène moyenne, par exemple comprise entre 20% et 35% en poids, ou une teneur en styrène élevée, par exemple de 35 à 45%, une teneur en liaisons vinyliques de la partie butadiénique comprise entre 15% et 70%, une teneur (% molaire) en liaisons trans-1,4 comprise entre 15% et 75% et une Tg comprise entre - 10°C et - 55°C ; un tel SBR peut être avantageusement utilisé en mélange avec un BR possédant de préférence plus de 90% (% molaire) de liaisons cis-1,4.

On notera que l'on peut envisager d'utiliser un ou plusieurs latex de caoutchouc naturel en coupage, un ou plusieurs latex de caoutchouc synthétique en coupage ou un coupage d'un ou plusieurs latex de caoutchouc naturel avec un ou plusieurs latex de caoutchouc synthétique.

Selon une variante de réalisation de l'invention, la composition comprend un deuxième élastomère qui peut être un élastomère diénique ou pas, dans ce dernier cas conviennent particulièrement des élastomères butyl non diéniques tels que des homopolymères de poly(isobutylène) ou des copolymères à base de poly(isobutylène) (bien entendu s'il s'agit de copolymères avec de l'isoprène, on retrouve les élastomères diéniques décrits précédemment), ainsi que les dérivés halogénés, en particulier généralement bromés ou chlorés, de ces homopolymères de poly(isobutylène) et copolymères à base de poly(isobutylène).

Conviennent également parmi les élastomères non diéniques, des copolymères d'isobutylène et de dérivés de styrène tels que les copolymères d'isobutylène et méthylstyrène bromé (BIMS) dont fait notamment partie l'élastomère nommé EXXPRO commercialisé par la société Exxon.

On peut également citer à titre d'élastomère non diénique convenant particulièrement pour l'invention, les élastomères thermoplastiques (TPE) non diéniques.

Avantageusement la fraction pondérale du premier élastomère diénique dans la matrice élastomérique est supérieure ou égale à 50% et de préférence supérieure ou égale à 60%.

Charges

On utilise à titre de charge renforçante majoritairement toute charge recouverte au moins partiellement de silice. Ainsi la charge recouverte au moins partiellement de silice peut être constituée en particulier par un noir de carbone, des hydroxydes métalliques notamment de magnésium ou d'aluminium, des particules de polymères réticulées.

Conviennent particulièrement les noirs de carbone recouverts partiellement ou intégralement de silice par un post traitement, ou les noirs de carbone modifiés in situ par de la silice tels que, à titre non limitatif, les charges commercialisées par la société Cabot Corporation sous la dénomination EcoblackTM « CRX 2000 » ou « CRX4000 »ou « CRX2125 » ou les charges décrites dans les publications US2003040553, WO9813428. Une telle charge renforçante contient préférentiellement un taux de silice de 10% en masse de la charge renforçante.

De telles charges peuvent être obtenue selon la méthode de recouvrement de noir de carbone par de la silice comme décrit dans les exemples 1 et 2 de la demande de brevet WO00/05312.

Conviennent également particulièrement les hydroxydes métalliques de synthèse recouverts de silice dont le métal M est choisi dans le groupe constitué par Al, Fe, Mg, et les mélanges de ces métaux. De préférence, M représente Al ou Mg tels que décrits notamment dans les publications WO06/002993 ou WO07/003408.

Cette charge recouverte au moins partiellement de silice constitue majoritairement la charge renforçante de la composition, c'est-à-dire qu'elle constitue au moins 50 % en poids de l'ensemble des charges renforçantes de la composition. Elle peut avantageusement constituée plus de 60 % en poids de la charge renforçante totale, préférentiellement plus de 80% en poids de la charge renforçante totale, encore plus préférentiellement plus de 95 % en poids de la charge renforçante totale.

Elle peut être utilisée seule ou en coupage avec une autre charge organique telle du noir de carbone ou des charges organiques de polyvinylaromatique fonctionnalisé telles que décrites dans les demandes WO-A-2006/069792 et WO-A-2006/069793, et/ou une ou plusieurs charges inorganiques renforçantes telle que de la silice et/ou une autre charge recouverte au moins partiellement de silice.

A titre de noir de carbone, conviennent tous les noirs de carbone, notamment les noirs du type HAF, ISAF, SAF conventionnellement utilisés dans les pneumatiques (noirs dits de grade pneumatique). Parmi ces derniers, on citera plus particulièrement les noirs de carbone renforçants des séries 100, 200 ou 300 (grades ASTM), comme par exemple les noirs N115, N134, N234, N326, N330, N339, N347, N375, ou encore, selon les applications visées, les noirs de séries plus élevées (par exemple N660, N683, N772).

Par "charge inorganique renforçante", doit être entendu dans la présente demande, par définition, toute charge inorganique ou minérale (quelles que soient sa couleur et son origine (naturelle ou de synthèse), encore appelée charge "blanche", charge "claire" voire "charge non noire" ("non-black filler") par opposition au noir de carbone, capable de renforcer à elle seule, sans autre moyen qu'un agent de couplage intermédiaire, une composition de caoutchouc destinée à la fabrication de pneumatiques, en d'autres termes apte à remplacer, dans sa fonction de renforcement, un noir de carbone conventionnel de grade pneumatique ; une telle charge se caractérise généralement, de manière connue, par la présence de groupes hydroxyle (-OH) à sa surface.

L'état physique sous lequel se présente la charge inorganique renforçante est indifférent, que ce soit sous forme de poudre, de microperles, de granulés, de billes ou toute autre forme densifiée appropriée. Bien entendu on entend également par charge inorganique renforçante des mélanges de différentes charges inorganiques renforçantes, en particulier de charges siliceuses et/ou alumineuses hautement dispersibles telles que décrites ci-après.

Comme charges inorganiques renforçantes conviennent notamment des charges minérales du type siliceuse, en particulier de la silice ($SiO_2$), ou du type alumineuse, en particulier de l'alumine ($Al_2O_3$). La silice utilisée peut être toute silice renforçante connue de l'homme du métier, notamment toute silice précipitée ou pyrogénée présentant une surface BET ainsi qu'une surface spécifique CTAB toutes deux inférieures à 450 $m^2/g$, de préférence de 30 à 400 $m^2/g$. A titres de silices précipitées hautement dispersibles (dites "HDS"), on citera par exemple les silices Ultrasil 7000 et Ultrasil 7005 de la société Degussa, les silices Zeosil 1165MP, 1135MP et 1115MP de la société Rhodia, la silice Hi-Sil EZ150G de la société PPG, les silices Zeopol 8715, 8745 et 8755 de la Société Huber, les silices à haute surface spécifique telles que décrites dans la demande WO 03/16837.

Selon une variante de réalisation de l'invention, la charge recouverte au moins partiellement par de la silice représente au moins 60% en poids de la charge renforçante dans la composition.

De préférence, la charge recouverte au moins partiellement par de la silice représente au moins 80% en poids de la charge renforçante dans la composition, plus préférentiellement au moins 95% en poids de la charge renforçante totale de la composition.

Selon une autre variante de réalisation de l'invention, la charge recouverte au moins partiellement par de la silice constitue la seule charge renforçante de la composition.

De manière préférentielle, le taux de charge renforçante totale est compris entre 20 et 200 pce, plus préférentiellement entre 25 et 150 pce et encore plus préférentiellement entre 25 et 100 pce, l'optimum étant de manière connue différent selon les applications particulières visées : le niveau de renforcement attendu sur un pneumatique vélo, par exemple, est bien sûr inférieur à celui exigé sur un pneumatique apte à rouler à grande vitesse de manière soutenue, par exemple un pneu moto, un pneu pour véhicule de tourisme ou pour véhicule utilitaire tel que Poids lourd.

Selon un mode de réalisation préférentiel de l'invention, on utilise à titre de charge renforçante recouverte au moins partiellement par de la silice, du noir de carbone recouvert au moins partiellement par de la silice avec un taux variant de 25 à 90 pce et on peut l'associer de préférence à une charge organique, en particulier du noir de carbone, ou inorganique, en particulier de la silice, dont le taux varie de 1 à 50 pce, plus particulièrement la charge totale de la composition comprenant du noir de carbone recouvert au moins partiellement par de la silice dont le taux varie de 30 à 75 pce et une charge organique, en particulier du noir de carbone, ou inorganique, en particulier de la silice, dont le taux varie de 1 à 30 pce.

Selon une autre variante préférentielle de l'invention, la composition comprend uniquement du noir de carbone recouvert au moins partiellement par de la silice avec un taux variant de 25 à 90 pce et plus préférentiellement le taux varie de 30 à 75 pce.

Selon un mode de réalisation préféré de l'invention, pour coupler la charge recouverte au moins partiellement de silice, voire une charge inorganique renforçante le cas échéant, à l'élastomère diénique, on utilise un agent de couplage (ou agent de liaison) au moins bifonctionnel destiné à assurer une connexion suffisante, de nature chimique

et/ou physique, entre la charge inorganique (surface de ses particules) et l'élastomère diénique. On utilise en particulier des organosilanes ou des polyorganosiloxanes au moins bifonctionnels.

On utilise notamment des silanes polysulfurés, dits "symétriques" ou "asymétriques" selon leur structure particulière, tels que décrits par exemple dans les demandes WO03/002648 (ou US 2005/016651) et WO03/002649 (ou US 2005/016650).

Conviennent en particulier, sans que la définition ci-après soit limitative, des silanes polysulfurés répondant à la formule générale (I) suivante:

(I) Z - A - Sx - A - Z , dans laquelle:

- x est un entier de 2 à 8 (de préférence de 2 à 5) ;
- les symboles A, identiques ou différents, représentent un radical hydrocarboné divalent (de préférence un groupement alkylène en C1-C18 ou un groupement arylène en C6-C12, plus particulièrement un alkylène en C1-C10, notamment en C1-C4, en particulier le propylène) ;
- les symboles Z, identiques ou différents, répondent à l'une des trois formules ci-après:

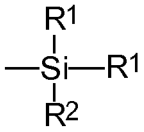 ; 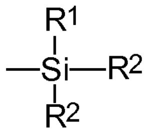 ; 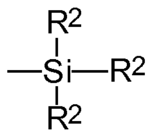 ,

dans lesquelles:

- les radicaux $R^1$, substitués ou non substitués, identiques ou différents entre eux, représentent un groupe alkyle en $C_1$-$C_{18}$, cycloalkyle en $C_5$-$C_{18}$ ou aryle en $C_6$-$C_{18}$ (de préférence des groupes alkyle en $C_1$-$C_6$, cyclohexyle ou phényle, notamment des groupes alkyle en $C_1$-$C_4$, plus particulièrement le méthyle et/ou l'éthyle).
- les radicaux $R^2$, substitués ou non substitués, identiques ou différents entre eux, représentent un groupe alkoxyle en $C_1$-$C_{18}$ ou cycloalkoxyle en $C_5$-$C_{18}$ (de préférence un groupe choisi parmi alkoxyles en $C_1$-$C_8$ et cycloalkoxyles en $C_5$-$C_8$, plus préférentiellement encore un groupe choisi parmi alkoxyles en $C_1$-$C_4$, en particulier méthoxyle et éthoxyle).

Dans le cas d'un mélange d'alkoxysilanes polysulfurés répondant à la formule (I) ci-dessus, notamment des mélanges usuels disponibles commercialement, la valeur moyenne des "x" est un nombre fractionnaire de préférence compris entre 2 et 5, plus préférentiellement proche de 4. Mais l'invention peut être aussi avantageusement mise en œuvre par exemple avec des alkoxysilanes disulfurés (x = 2).

A titre d'exemples de silanes polysulfurés, on citera plus particulièrement les polysulfures (notamment disulfures, trisulfures ou tétrasulfures) de bis-(alkoxyl($C_1$-$C_4$)-alkyl($C_1$-$C_4$)silyl-alkyl($C_1$-$C_4$)), comme par exemple les polysulfures de bis(3-triméthoxysilylpropyl) ou de bis(3-triéthoxysilylpropyl). Parmi ces composés, on utilise en particulier le tétrasulfure de bis(3-triéthoxysilylpropyl), en abrégé TESPT, de formule $[(C_2H_5O)_3Si(CH_2)_3S_2]_2$ ou le disulfure de bis-(triéthoxysilylpropyle), en abrégé TESPD, de formule $[(C_2H_5O)_3Si(CH_2)_3S]_2$. On citera également à titre d'exemples préférentiels les polysulfures (notamment disulfures, trisulfures ou tétrasulfures) de bis-(monoalkoxyl($C_1$-$C_4$)-dialkyl($C_1$-$C_4$)silylpropyl), plus particulièrement le tétrasulfure de bis-monoéthoxydiméthylsilylpropyl tel que décrit dans la demande de brevet WO 02/083782 précitée (ou US 7 217 751).

A titre d'exemple d'agents de couplage autres qu'un alkoxysilane polysulfuré, on citera notamment des POS (polyorganosiloxanes) bifonctionnels ou encore des polysulfures d'hydroxysilane ($R^2$ = OH dans la formule I ci-dessus) tels que décrits par exemple dans les demandes de brevet WO 02/30939 (ou US 6 774 255), WO 02/31041 (ou US 2004/051210), et WO2007/061550, ou encore des silanes ou POS porteurs de groupements fonctionnels azo-dicarbonyle, tels que décrits par exemple dans les demandes de brevet WO 2006/125532, WO 2006/125533, WO 2006/125534.

A titre d'exemples d'autres silanes sulfurés, on citera par exemple les silanes porteurs d'au moins une fonction thiol (-SH) (dits mercaptosilanes) et/ou d'au moins une fonction thiol bloqué, tels que décrits par exemple dans les brevets ou demandes de brevet US 6 849 754, WO 99/09036, WO 2006/023815, WO 2007/098080, WO 2010/072685 et WO 2008/055986.

Bien entendu pourraient être également utilisés des mélanges des agents de couplage précédemment décrits, comme décrit notamment dans la demande WO 2006/125534 précitée.

Le taux d'agent de couplage est avantageusement inférieur à 20 pce, étant entendu qu'il est en général souhaitable d'en utiliser le moins possible. Typiquement le taux d'agent de couplage représente de 0,05% à 10% massique

par rapport à la quantité de charge inorganique renforçante, de préférence de 0,1 à 7% massique et encore plus préférentiellement de 0,2 à 5% massique.

Ce taux est aisément ajusté par l'homme du métier selon le taux de charge utilisé dans la composition.

On notera que selon un autre mode de réalisation préféré de l'invention, la composition ne comprend pas d'agent de couplage de la charge recouverte au moins partiellement de silice à l'élastomère diénique de la composition.

Ces compositions peuvent également contenir, en complément des agents de couplage, des activateurs de couplage, des agents de recouvrement (comportant par exemple la seule fonction Y) de la charge inorganique renforçante ou plus généralement des agents d'aide à la mise en œuvre susceptibles de manière connue, grâce à une amélioration de la dispersion de la charge inorganique dans la matrice de caoutchouc et à un abaissement de la viscosité des compositions, d'améliorer leur faculté de mise en œuvre à l'état cru, ces agents étant par exemple des silanes hydrolysables tels que des alkylalkoxysilanes (notamment des alkyltriéthoxysilanes), des polyols, des polyéthers (par exemple des polyéthylèneglycols), des amines primaires, secondaires ou tertiaires (par exemple des trialcanol-amines), des POS hydroxylés ou hydrolysables, par exemple des $\alpha,\omega$-dihydroxy-polyorganosiloxanes (notamment des $\alpha,\omega$-dihydroxy-polydiméthylsiloxanes), des acides gras comme par exemple l'acide stéarique.

Autres additifs possibles

Les compositions de caoutchouc conformes à l'invention comportent optionnellement également tout ou partie des additifs usuels habituellement utilisés dans les compositions d'élastomères destinées notamment à la fabrication de bandes de roulement, comme par exemple des pigments, des agents de protection tels que cires anti-ozone, anti-ozonants chimiques, anti-oxydants, des agents anti-fatigue, des résines renforçantes, des accepteurs (par exemple résine phénolique novolaque) ou des donneurs de méthylène (par exemple HMT ou H3M).

Selon un mode de réalisation préférentiel, la composition selon l'invention comporte moins de 15 pce d'agents plastifiants, de préférence moins de 5 pce, et encore plus préférentiellement la composition est dépourvue d'agents plastifiants. Les agents plastifiants classiquement utilisés dans de telles compositions étant les résines hydrocarbonées solides (ou résine plastifiante), les huiles d'extension (ou huile plastifiante), ou le mélange des deux.

Système de réticulation

Le système de réticulation est préférentiellement un système de vulcanisation, c'est-à-dire un système à base de soufre (ou d'un agent donneur de soufre) et d'un accélérateur primaire de vulcanisation. A ce système de vulcanisation de base viennent s'ajouter, incorporés au cours de la première phase non-productive et/ou au cours de la phase productive telles que décrites ultérieurement, divers accélérateurs secondaires ou activateurs de vulcanisation connus tels qu'oxyde de zinc, acide stéarique ou composés équivalents, dérivés guanidiques (en particulier diphénylguanidine).

Le soufre est utilisé à un taux préférentiel compris entre 0,5 et 12 pce, en particulier entre 1 et 10 pce. L'accélérateur primaire de vulcanisation est utilisé à un taux préférentiel compris entre 0,5 et 10 pce, plus préférentiellement compris entre 0,5 et 5,0 pce.

On peut utiliser comme accélérateur (primaire ou secondaire) tout composé susceptible d'agir comme accélérateur de vulcanisation des élastomères diéniques en présence de soufre, notamment des accélérateurs du type thiazoles ainsi que leurs dérivés, des accélérateurs de types thiurames, dithiocarbamates de zinc. Ces accélérateurs sont par exemple choisis dans le groupe constitué par disulfure de 2-mercaptobenzothiazyle (en abrégé "MBTS"), disulfure de tetrabenzylthiurame ("TBZTD"), N-cyclohexyl-2-benzothiazyle sulfénamide ("CBS"), N,N-dicyclohexyl-2-benzothiazyle sulfénamide ("DCBS"), N-ter-butyl-2-benzothiazyle sulfénamide ("TBBS"), N-ter-butyl-2-benzothiazyle sulfénimide ("TBSI"), dibenzyldithiocarbamate de zinc ("ZBEC") et les mélanges de ces composés. De préférence, on utilise un accélérateur primaire du type sulfénamide.

Fabrication des compositions de caoutchouc et des mélanges maîtres

Les compositions de caoutchouc de l'invention sont fabriquées dans des mélangeurs appropriés, en utilisant deux phases de préparation successives selon une procédure générale bien connue de l'homme du métier : une première phase de travail ou malaxage thermo-mécanique (parfois qualifiée de phase "non-productive") à haute température, jusqu'à une température maximale comprise entre 130°C et 200°C, de préférence entre 145°C et 185°C, suivie d'une seconde phase de travail mécanique (parfois qualifiée de phase "productive") à plus basse température, typiquement inférieure à 120°C, par exemple entre 60°C et 100°C, phase de finition au cours de laquelle est incorporé le système de réticulation ou vulcanisation.

Selon un mode de réalisation préférentiel l'invention, tous les constituants de base des compositions de l'invention, à l'exception du système de vulcanisation, sont incorporés de manière intime, par malaxage, au cours de la première phase dite non-productive, c'est-à-dire que l'on introduit dans le mélangeur et que l'on malaxe thermomécaniquement, en une ou plusieurs étapes, au moins ces différents constituants de base jusqu'à atteindre la température maximale comprise entre 130°C et 200°C, de préférence comprise entre 145°C et 185°C.

Selon un mode de réalisation préférentiel de l'invention, l'élastomère diénique et la charge recouverte au moins partiellement par de la silice sont mélangés avec les constituants de base des compositions de l'invention, à l'exception du système de vulcanisation, sous la forme d'un mélange maître qui a été préalablement préparé.

Préférentiellement ce mélange maître est réalisé en phase « liquide ». Pour ce faire, on a fait appel à l'élastomère diénique sous forme de latex qui se présente sous forme de particules d'élastomère dispersées dans l'eau, et à une dispersion aqueuse de la charge recouverte au moins partiellement de silice, c'est-à-dire une charge dispersée dans de l'eau, couramment appelée « slurry ». Plus préférentiellement encore on suivra les étapes de procédé décrites dans le document US 6 048 923, qui consiste notamment à incorporer un flux continu d'un premier fluide constitué par le latex d'élastomère dans la zone de mélangeage d'un réacteur de coagulation, à incorporer un deuxième flux continu d'un deuxième fluide constitué par la dispersion aqueuse de la charge sous pression dans la zone de mélangeage pour former un mélange avec le latex d'élastomère ; le mélangeage de ces deux fluides étant suffisamment énergétique pour permettre de coaguler quasiment complètement le latex d'élastomère avec la charge avant l'orifice de sortie du réacteur de coagulation puis à sécher le coagulum obtenu.

On notera en particulier que dans le cas de l'incorporation d'un deuxième élastomère et/ou d'une deuxième charge organique ou inorganique, cette ou ces incorporations peuvent être réalisées simultanément à l'introduction dans le mélangeur des autres constituants (notamment le mélange maître) mais également avantageusement que cette ou ces incorporations peut être décalées dans le temps de quelques dizaines de secondes à quelques minutes.

On notera que dans le cas d'un ajout d'une charge organique ou inorganique et d'un deuxième élastomère, ceux-ci peuvent être introduits séparément ou sous la forme d'un deuxième mélange maître contenant le deuxième élastomère et la charge organique ou inorganique. Dans le cas de l'introduction du deuxième élastomère seul et de la charge organique ou inorganique seule, décalée dans le temps de quelques dizaines de secondes à quelques minutes, la charge organique ou inorganique peut être introduite avant, après ou simultanément au deuxième élastomère.

A titre d'exemple, la première phase (non-productive) est conduite en une seule étape thermomécanique au cours de laquelle on introduit, dans un mélangeur approprié tel qu'un mélangeur interne usuel, tous les constituants nécessaires (sous forme le cas échéant de mélange maître comme on l'a précisé précédemment), et autres additifs divers, à l'exception du système de vulcanisation. La durée totale du malaxage, dans cette phase non-productive, est de préférence comprise entre 1 et 15 min. Après refroidissement du mélange ainsi obtenu au cours de la première phase non-productive, on incorpore alors le système de vulcanisation à basse température, généralement dans un mélangeur externe tel qu'un mélangeur à cylindres; le tout est alors mélangé (phase productive) pendant quelques minutes, par exemple entre 2 et 15 min.

La composition finale ainsi obtenue est ensuite calandrée par exemple sous la forme d'une feuille ou d'une plaque, notamment pour une caractérisation au laboratoire, ou encore extrudée sous la forme d'un profilé de caoutchouc utilisable comme une bande de roulement de pneumatiques utilisés pour les poids lourds.

## III EXEMPLES DE REALISATION DE L'INVENTION

D'autres détails et caractéristiques avantageux de l'invention ressortiront ci-après de la description d'exemples de réalisation de l'invention en référence à la figure unique qui représente une vue méridienne d'un schéma d'un pneumatique selon un premier mode de réalisation de l'invention.

La figure n'est pas représentée à l'échelle pour en simplifier la compréhension. La figure ne représente qu'une demi-vue d'un pneumatique qui se prolonge de manière symétrique par rapport à l'axe XX' qui représente le plan médian circonférentiel, ou plan équatorial, d'un pneumatique.

Sur la figure, le pneumatique 1, de dimension 385/65 R 22.5, comprend une armature de carcasse radiale 2 ancrée dans deux bourrelets 3, autour de tringles 4. L'armature de carcasse 2 est formée d'une seule couche de câbles métalliques. L'armature de carcasse 2 est frettée par une armature de sommet 5, elle-même coiffée d'une bande de roulement 6. La bande de roulement comporte des rainures formant des nervures.

Les zones basses et bourrelets du pneumatique 1 ne sont notamment pas représentés sur la figure.

Sur la figure, l'armature de sommet 5 est formée radialement de l'intérieur à l'extérieur :

- d'une couche de triangulation 51 formée de câbles métalliques inextensibles 9.35 non frettés, continus sur toute la largeur de la nappe, orientés d'un angle égal à 65°,
- d'une première couche de travail 52 formée de câbles métalliques inextensibles 11.35 non frettés, continus sur toute la largeur de la nappe, orientés d'un angle égal à 18°,
- d'une seconde couche de travail 53 formée de câbles métalliques inextensibles 11.35 non frettés, continus sur toute la largeur de la nappe, orientés d'un angle égal à 18° et croisés aux câbles métalliques de la première couche de travail,

- d'une couche de protection 54 formée de câbles métalliques élastiques 6.35 non frettés, continus sur toute la largeur de la nappe, orientés d'un angle égal à 18° dans le même sens que les câbles métalliques de la couche de travail 53.

Conformément à l'invention, la bande de roulement 6 est constituée d'une première couche 61 radialement extérieure qui vient au contact du sol et d'une couche 62 radialement intérieure.
La couche 61 est constituée d'un mélange élastomérique chargé M (tel que décrit plus loin) et la couche 62 est constituée d'un mélange élastomérique chargé T1, T2 ou C1 (tels que décrits plus loin).
Le rapport du volume de la couche 62 du deuxième mélange élastomérique sur la somme des volumes des couches 61 et 62 est égal à 42 %.
Le rapport de l'épaisseur d62, mesurée selon la direction radiale à l'extrémité de la couche de travail 53 radialement la plus extérieure, de la couche 62 sur la somme des épaisseurs d61 et d62, mesurées selon la direction radiale à l'extrémité de la couche de travail 53, des couches 61 et 62 est égal à 33 %.
Trois pneumatiques ont été réalisés sur la base des trois mélanges élastomériques décrits ci-dessous avec certaines de leurs propriétés.

Préparation des compositions de caoutchouc

Les compositions M et T1 sont réalisées selon un procédé classique de mélangeage (décrit ci-après) sous forme solide dans lequel l'élastomère diénique et la charge renforçante sont introduits sous forme solide.
La composition de caoutchouc témoin T2 non-conforme à l'invention et la composition C1 conforme à l'invention sont réalisées selon le procédé de mélangeage décrit ci-après mais dans lequel l'élastomère diénique et la charge renforçante ont été préparé préalablement sous forme d'un mélange maître A.
Le mélange maître A comprenant du caoutchouc naturel et une charge (noir de carbone, silice ou noir recouvert par de la silice) est réalisé en phase liquide selon le procédé décrit dans le brevet U.S. Patent No 6,048,923.
Ainsi on prépare selon le protocole détaillé dans le brevet précité, un mélange maître à partir d'une dispersion aqueuse de charge et de latex de caoutchouc naturel de champs (« field latex ») en provenance de Malaisie présentant un extrait sec de caoutchouc de 28% et un taux d'ammoniac de 0,3%.
On obtient ainsi un mélange maître A de caoutchouc naturel et de charge dans lequel le taux de charge est de 50 pce.
Le procédé de mélangeage utilisé pour les différentes compositions est le suivant.
On procède pour les essais qui suivent de la manière suivante: on introduit dans un mélangeur interne, rempli à 70% et dont la température initiale de cuve est d'environ 90°C, le mélange maître A pour les compositions T2 et C1, ou le caoutchouc naturel sous forme solide et la charge renforçante pour les compositions M et T1, puis, après une à deux minutes de malaxage, les divers autres ingrédients à l'exception du système de vulcanisation. On conduit alors un travail thermomécanique (phase non-productive) en une étape (durée totale du malaxage égale à environ 5 min), jusqu'à atteindre une température maximale de "tombée" d'environ 165°C.
On récupère le mélange ainsi obtenu, on le refroidit puis on ajoute le système de vulcanisation (soufre et accélérateur sulfénamide) sur un mélangeur externe (homo-finisseur) à 70°C, en mélangeant le tout (phase productive) pendant environ 5 à 6 min. Lors de la présence d'agent de recouvrement, ce dernier peut aussi être introduit sur mélangeur externe au lieu de l'introduction sur mélangeur interne.
Les compositions ainsi obtenues sont ensuite calandrées soit sous la forme de plaques (épaisseur de 2 à 3 mm) ou de feuilles fines de caoutchouc pour la mesure de leurs propriétés physiques ou mécaniques, soit sous la forme de profilés utilisables directement, après découpage et/ou assemblage aux dimensions souhaitées, par exemple comme produits semi-finis pour pneumatiques, en particulier comme bandes de roulement de pneumatiques.

Essais

Ces essais ont pour but de mettre en évidence les propriétés significativement améliorées de résistance au roulement et d'usure de pneumatique conforme à l'invention, vis-à-vis de pneumatiques témoins non conformes à l'invention du fait de leur formulation et/ou de leur procédé de préparation.
La composition de caoutchouc T1 est donc préparées « en masse » et les compositions T2 et C1 sont préparées à partir du mélange maître A, elles se distinguent les unes des autres comme suite :

- la composition T1 non-conforme à l'invention, comprend un coupage de noir de carbone et de silice,
- la composition T2 non-conforme à l'invention, a une formulation identique à la composition T1,
- la composition C1 conforme à l'invention, comprend un coupage de silice et de noir de carbone recouvert de silice à titre de charge renforçante.

La composition M est une composition classique pour une première couche de bande de roulement de pneumatique « Poids Lourds ».

Les constituants des compositions M, T1, T2 et C1 sont présentés dans le tableau 1 qui suit, dans lequel les taux sont indiqués en parties en poids pour cent parties d'élastomères, pce.

Tableau 1

| **Composition** | **M** | **T1** | **T2** | **C1** |
|---|---|---|---|---|
| Caoutchouc naturel | 80 | 100 | 100 | 100 |
| SBR | 20 | - | - | - |
| Noir de carbone (1) | 42 | - | - | - |
| Noir de carbone (2) | - | 24 | 24 | - |
| Silice (3) | 10 | 18 | 18 | 7 |
| Noir recouvert de silice (4) | - | - | - | 35 |
| Agent de couplage (5) | 3,6 | 3,6 | 3,6 | 3,6 |
| Anti-oxydant (5) | | | | |
| Acide stéarique | 2 | 2 | 2 | 2 |
| ZnO (7) | 3 | 3 | 3 | 3 |
| CBS (8) | 1 | 1 | 1 | 1 |
| Soufre | 2 | 2 | 2 | 2 |

(1) N234 commercialisé par la société Cabot Corporation
(2) N375 commercialisé par la société Cabot Corporation
(3) silice de précipitation « Zéosil 1165MP » commercialisée par la société Solvay
(4) « CRX2125 » commercialisé par la société Cabot Corporation
(5) tétrasulfure de bis(3-triéthoxysilylpropyl), TESPT, "SI69" commercialisé par la société Evonik
(6) N-1,3-diméthylbutyl-N-phényl-para-phénylènediamine "Santoflex 6-PPD" commercialisé par la société Flexsys,
(7) oxyde de zinc de grade industriel commercialisé par la société Umicore
(8) N-cyclohexyl-2-benzothiazyl-sulfénamide "Santocure CBS" commercialisé par la société Flexsys

Les propriétés mesurées de ces compositions après cuisson à 150°C pendant 40 minutes sont données dans le tableau 2 qui suit, ainsi que le test d'usure réalisé sur des pneumatiques comprenant ces compositions comme bande de roulement.

Tableau 2

| **Composition** | **T1** | **T2** | **C1** |
|---|---|---|---|
| **Propriétés après** | **cuisson** | | |
| Note Z | 55 | 80 | 88 |
| Tan$\delta_{max}$ retour | 0.083 | 0.057 | 0.055 |
| **Test d'usure** | | | |
| Perfo usure | 100 | 98 | 107 |

On constate de façon attendue que les compositions T2 et C1 préparées à partir d'un mélange maître A réalisé en phase liquide, présentent une dispersion de la charge dans la matrice élastomérique très améliorée par rapport à de la composition préparée en masse T1.

On constate également que les compositions T2 et C1 présentant une très bonne dispersion de la charge dans la composition, présentent une hystérèse significativement réduite par rapport à la composition préparée en masse T1.

De plus, on constate que pour les compositions à base de noir de carbone ou de silice, la dispersion de la charge dans la composition n'influe pas sur les performances en usure de pneumatiques dont les bandes de roulement sont constituées par ces compositions (indice de performance entre T1 etT2 identiques ou quasiment identiques) alors

que le passage à la composition C1 permet de façon tout à fait surprenante d'améliorer très significativement la résistance à l'usure du pneumatique dont la bande de roulement est constituées par cette composition C1.

On montre ainsi une synergie inattendue de la combinaison d'une charge recouverte par de la silice avec sa très bonne dispersion de la composition de la couche radialement intérieure d'une bande de roulement, pour l'obtention de pneumatique pour véhicule poids lourds présentant à la fois des propriétés de résistance au roulement et de résistance à l'usure améliorées.

## Revendications

1. Pneumatique à armature de carcasse radiale destiné à équiper des véhicules portant de lourdes charges et roulant à vitesse soutenue, comprenant une armature de sommet, elle-même coiffée radialement d'une bande de roulement réunie à deux bourrelets par l'intermédiaire de deux flancs, ladite bande de roulement comprenant au moins deux couches de mélange polymérique radialement superposées, une première couche radialement extérieure venant au contact du sol et une deuxième couche radialement intérieure, **caractérisé en ce que** la deuxième couche a une composition à base d'au moins un élastomère diénique, une charge renforçante comprenant majoritairement une charge recouverte au moins partiellement de silice, un agent de couplage de la charge avec l'élastomère et un système de réticulation, la dispersion de la charge dans la matrice élastomérique ayant une note Z supérieure ou égale à 70, la note Z étant mesurée selon la méthode décrite par S. Otto et Al dans Kautschuk Gummi Kunststoffe, 58 Jahrgang, NR 7-8/2005, en accord avec la norme ISO 11345.

2. Pneumatique selon la revendication 1, dans lequel la bande de roulement comprend une troisième couche radialement intérieure à la deuxième couche, la troisième couche ayant une composition identique ou différente de celle de la deuxième couche.

3. Pneumatiques selon l'une quelconque des revendications 1 ou 2, dans laquelle la charge recouverte au moins partiellement de silice constitue au moins 60% en poids de la charge renforçante totale de la composition.

4. Pneumatiques selon l'une quelconque des revendications 1 à 3, dans laquelle la charge recouverte au moins partiellement de silice constitue au moins 80% en poids de la charge renforçante totale de la composition.

5. Pneumatique selon l'une quelconque des revendications précédentes, dans lequel la charge recouverte au moins partiellement par de la silice est choisie parmi le noir de carbone, des hydroxydes métalliques notamment de magnésium ou d'aluminium, et des particules de polymères réticulées.

6. Pneumatique selon la revendication 5, dans lequel la charge au moins partiellement recouverte de silice est constituée par du noir de carbone.

7. Pneumatique selon l'une quelconque des revendications précédentes, dans lequel la charge recouverte au moins partiellement par de la silice est utilisé avec un taux variant de 25 à 90 pce dans la composition.

8. Pneumatique selon l'une quelconque des revendications précédentes, dans lequel la charge recouverte au moins partiellement par de la silice est utilisée en coupage avec du noir de carbone dans la composition.

9. Pneumatique selon l'une quelconque des revendications précédentes, dans lequel la charge recouverte au moins partiellement par de la silice est utilisée en coupage avec de la silice dans la composition.

10. Pneumatique selon l'une quelconque des revendications 8 ou 9, dans lequel le taux de charge renforçante total de la composition varie de 30 à 75 pce, le taux de noir de carbone ou de silice variant de 1 à 30 pce.

11. Pneumatique selon l'une quelconque des revendications précédentes, dans lequel l'élastomère diénique de la composition est choisi dans le groupe constitué par les polybutadiènes, le caoutchouc naturel, les polyisoprènes de synthèse, les copolymères de butadiène, les copolymères d'isoprène et les mélanges de ces élastomères.

12. Pneumatique selon la revendication 11, dans lequel l'élastomère diénique est un caoutchouc naturel.

13. Pneumatique selon l'une quelconque des revendications précédentes, qui comporte moins de 15 pce d'agents plastifiants, de préférence moins de 5 pce.

## Patentansprüche

1. Luftreifen mit radialer Karkassenbewehrung, der dazu bestimmt ist, Fahrzeuge auszurüsten, die schwere Lasten tragen und bei gleich bleibender Geschwindigkeit fahren, umfassend eine Scheitelbewehrung, die wiederum radial von einem Laufstreifen überdeckt wird, der über zwei Flanken mit zwei Wülsten verbunden ist, wobei der Laufstreifen mindestens zwei radial überlagerte Lagen aus Polymermischung umfasst, eine erste radial äußere Lage, die in Kontakt mit dem Boden gelangt, und eine zweite radial innere Lage, **dadurch gekennzeichnet, dass** die zweite Lage eine Zusammensetzung auf Basis von mindestens einem Dienelastomer, einem verstärkenden Füllstoff, der mehrheitlich einen mindestens teilweise mit Silica überzogenen Füllstoff umfasst, einem Kuppler zum Kuppeln des Füllstoffs mit dem Elastomer und einem Vernetzungssystem hat, wobei die Dispersion des Füllstoffs in der Elastomermatrix einen Z-Wert größer oder gleich 70 hat, wobei der Z-Wert nach der von Otto et al. in Kautschuk Gummi Kunststoffe, 58. Jahrgang, Nr. 7-8/2005, beschriebenen Methode im Einklang mit der Norm ISO 11345 gemessen wird.

2. Luftreifen nach Anspruch 1, bei dem der Laufstreifen eine dritte Lage radial innerhalb der zweiten Lage umfasst, wobei die dritte Lage eine Zusammensetzung hat, die identisch mit oder verschieden von derjenigen der zweiten Lage ist.

3. Luftreifen nach einem der Ansprüche 1 oder 2, bei dem der mindestens teilweise mit Silica überzogene Füllstoff mindestens 60 Gew.-% des gesamten verstärkenden Füllstoffs der Zusammensetzung darstellt.

4. Luftreifen nach einem der Ansprüche 1 bis 3, bei dem der mindestens teilweise mit Silica überzogene Füllstoff mindestens 80 Gew.-% des gesamten verstärkenden Füllstoffs der Zusammensetzung darstellt.

5. Luftreifen nach einem der vorhergehenden Ansprüche, bei dem der mindestens teilweise mit Silica überzogene Füllstoff unter Ruß, metallischen Hydroxiden, insbesondere von Magnesium oder Aluminium, und vernetzten Polymerpartikeln ausgewählt ist.

6. Luftreifen nach Anspruch 5, bei dem der mindestens teilweise mit Silica überzogene Füllstoff aus Ruß besteht.

7. Luftreifen nach einem der vorhergehenden Ansprüche, bei dem der mindestens teilweise mit Silica überzogene Füllstoff mit einem Anteil von 25 bis 90 pce in der Zusammensetzung verwendet wird.

8. Luftreifen nach einem der vorhergehenden Ansprüche, bei dem der mindestens teilweise mit Silica überzogene Füllstoff im Verschnitt mit Ruß in der Zusammensetzung verwendet wird.

9. Luftreifen nach einem der vorhergehenden Ansprüche, bei dem der mindestens teilweise mit Silica überzogene Füllstoff im Verschnitt mit Silica in der Zusammensetzung verwendet wird.

10. Luftreifen nach einem der Ansprüche 8 oder 9, bei dem der Gesamtanteil des verstärkenden Füllstoffs der Zusammensetzung von 30 bis 75 pce variiert, wobei der Ruß- oder Silicaanteil von 1 bis 30 pce variiert.

11. Luftreifen nach einem der vorhergehenden Ansprüche, bei dem das Dienelastomer der Zusammensetzung aus der Gruppe gewählt ist, die aus den Polybutadienen, dem Naturkautschuk, den synthetischen Polyisoprenen, den Butadien-Copolymeren, den Isopren-Copolymeren und den Mischungen dieser Elastomere besteht.

12. Luftreifen nach Anspruch 11, bei dem das Dienelastomer ein Naturkautschuk ist.

13. Luftreifen nach einem der vorhergehenden Ansprüche, der weniger als 15 pce, bevorzugt weniger als 5 pce Weichmacher beinhaltet.

## Claims

1. Tyre having a radial carcass reinforcement intended to equip vehicles carrying heavy loads and running at sustained speed, comprising a crown reinforcement, itself capped radially with a tread joined to two beads via two sidewalls, said tread comprising at least two radially superposed layers of polymeric compound, a radially outer first layer that comes into contact with the ground and a radially inner second layer, **characterized in that** the second layer has

a composition based on at least a diene elastomer, a reinforcing filler comprising predominantly a filler covered at least partially by silica, an agent for coupling the filler with the elastomer and a crosslinking system, the dispersion of the filler in the elastomeric matrix having a Z value greater than or equal to 70, the Z value being measured according to the method described by S. Otto *et al.* in Kautschuk Gummi Kunststoffe, 58 Jahrgang, NR 7-8/2005, in agreement with standard ISO 11345.

**2.** Tyre according to Claim 1, in which the tread comprises a third layer radially on the inside of the second layer, the third layer having a composition identical to or different from that of the second layer.

**3.** Tyres according to either one of Claims 1 and 2, in which the filler covered at least partially by silica constitutes at least 60% by weight of the total reinforcing filler of the composition.

**4.** Tyres according to any one of Claims 1 to 3, in which the filler covered at least partially by silica constitutes at least 80% by weight of the total reinforcing filler of the composition.

**5.** Tyre according to any one of the preceding claims, in which the filler covered at least partially by silica is selected from carbon black, metal hydroxides, especially magnesium or aluminium hydroxides, and crosslinked polymer particles.

**6.** Tyre according to Claim 5, in which the filler covered at least partially by silica consists of carbon black.

**7.** Tyre according to any one of the preceding claims, in which the filler covered at least partially by silica is used with a content ranging from 25 to 90 phr in the composition.

**8.** Tyre according to any one of the preceding claims, in which the filler covered at least partially by silica is used in a blend with carbon black in the composition.

**9.** Tyre according to any one of the preceding claims, in which the filler covered at least partially by silica is used in a blend with silica in the composition.

**10.** Tyre according to either one of Claims 8 and 9, in which the total content of reinforcing filler of the composition varies from 30 to 75 phr, the content of carbon black or of silica varying from 1 to 30 phr.

**11.** Tyre according to any one of the preceding claims, in which the diene elastomer of the composition is selected from the group consisting of polybutadienes, natural rubber, synthetic polyisoprenes, butadiene copolymers, isoprene copolymers and mixtures of these elastomers.

**12.** Tyre according to Claim 11, in which the diene elastomer is a natural rubber.

**13.** Tyre according to any one of the preceding claims, which comprises less than 15 phr of plasticizing agents, preferably less than 5 phr.

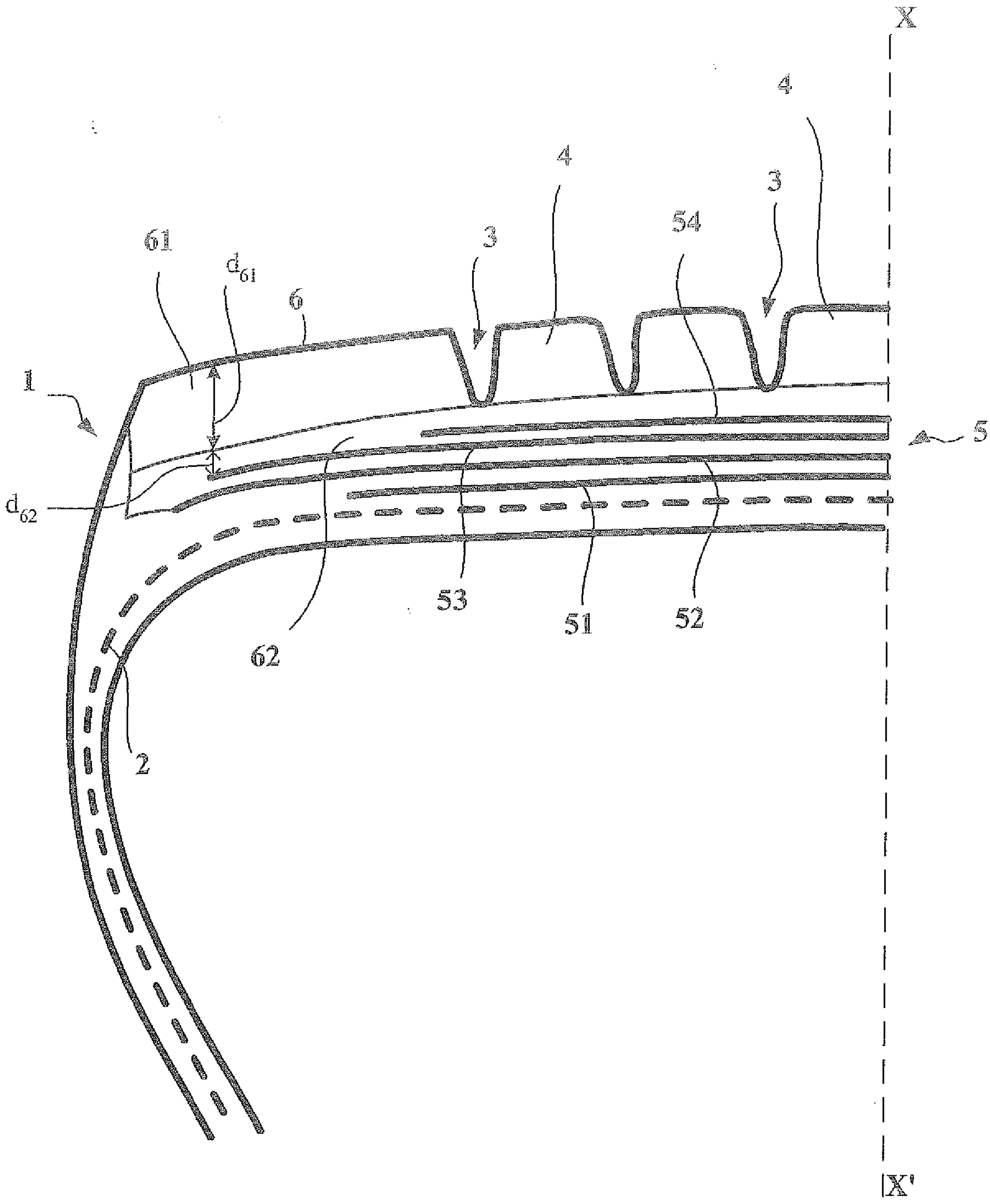


FIGURE UNIQUE

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- WO 9813428 A
- EP 711805 B1
- FR 2888243
- EP 0997490 A
- US 6048923 A
- WO 2012037244 A
- FR 2740778
- US 6013718 A
- WO 2008141702 A
- FR 2765882
- US 5977238 A
- WO 0192402 A
- US 6815473 B
- WO 2004096865 A
- US 20060089445 A
- EP 1127909 A
- US 6503973 B
- WO 2009000750 A
- WO 2009000752 A
- US 2003040553 A
- WO 0005312 A
- WO 06002993 A
- WO 07003408 A
- WO 2006069792 A
- WO 2006069793 A
- WO 0316837 A
- WO 03002648 A
- US 2005016651 A
- WO 03002649 A
- US 2005016650 A
- WO 02083782 A
- US 7217751 B
- WO 0230939 A
- US 6774255 B
- WO 0231041 A
- US 2004051210 A
- WO 2007061550 A
- WO 2006125532 A
- WO 2006125533 A
- WO 2006125534 A
- US 6849754 B
- WO 9909036 A
- WO 2006023815 A
- WO 2007098080 A
- WO 2010072685 A
- WO 2008055986 A

### Littérature non-brevet citée dans la description

- **S. OTTO et al.** *Kautschuk Gummi Kunststoffe,* 2005, vol. 58 (7-8
- Latex concentrates : properties and composition. **DE K.F. GASELEY ; A.D.T. GORDON ; T.D. PENDLE ; A.D. ROBERTS.** Naturel Rubber Science and Technology. Oxford University Press, 1988
- **C. W. CARR ; 1. M. KOLTHOFF ; E. J. MEEHAN.** Journal of Polymer Science. University of Minesota, 1950, vol. V, 201-206
- JOURNAL OF POLYMER SCIENCE. University of Minesota, 1951, vol. VI, 73-81
- **E. J. VANDENBERG ; G. E. HULSE.** Industrial and Engineering Chemistry. Hercules Powder Company, 1948, vol. 40, 932-937
- **J. R. MILLER ; H. E. DIEM ; B. F. GOODRICH.** Industrial and Engineering Chemistry. Chemical Co, 1954, vol. 46, 1065-1073